(19) Europäisches Patentamt
European Patent Office
Office européen des brevets

(11) Veröffentlichungsnummer: **0 192 152**
**B1**

(12) **EUROPÄISCHE PATENTSCHRIFT**

(45) Veröffentlichungstag der Patentschrift: **24.10.90**

(51) Int. Cl.$^5$: **C 08 F 6/00**, C 08 F 6/22, C 08 J 3/00, C 08 L 55/02

(21) Anmeldenummer: **86101656.6**

(22) Anmeldetag: **10.02.86**

(54) **Formmassen mit einheitlicher Korngrösse und verbesserter Thermostabilität.**

(30) Priorität: **20.02.85 DE 3505749**

(43) Veröffentlichungstag der Anmeldung:
**27.08.86 Patentblatt 86/35**

(45) Bekanntmachung des Hinweises auf die Patenterteilung:
**24.10.90 Patentblatt 90/43**

(84) Benannte Vertragsstaaten:
**BE DE FR GB IT NL**

(56) Entgegenhaltungen:
**EP-A-0 121 854**
**EP-A-0 121 855**

(73) Patentinhaber: **BAYER AG**
**D-5090 Leverkusen 1 Bayerwerk (DE)**

(72) Erfinder: **Eichenauer, Herbert, Dr.**
**Goethestr. 71**
**D-4047 Dormagen (DE)**
Erfinder: **Pischtschan, Alfred, Dr.**
**Zur Eiche 33**
**D-5067 Kürten (DE)**
Erfinder: **Ott, Karl-Heinz, Dr.**
**Paul Klee-Str. 54**
**D-5090 Leverkusen (DE)**

**EP 0 192 152 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der vorliegenden Erfindung sind elastisch-thermoplastische oder thermoplastische pulverförmige Formmassen mit einheitlicher Korngröße und verbesserter Thermostabilität sowie Verfahren zu ihrer Herstellung.

Wäßrige Polymerisatlatices werden üblicherweise in Polymerpulver umgewandelt durch Koagulation der Latexteilchen durch Zugabe wäßriger Salzlösungen oder verdünnter Säuren.

Dabei fallen jedoch in der Regel die koagulierten Pulver mit einem breiten Spektrum der Korngrößenverteilung an. Dadurch entstehende Nachteile sind z.B. die durch einen übermäßig hohen Feinanteil auftretende Gefahr von Staubexplosionen sowie Probleme bei Lagerung, Transport und Mischung mit anderen pulver- oder granulatförmigen Polymerisaten.

Möglichkeiten zur Reduzierung des Feinanteils sind z.B. in den US-Patentschriften 3 248 455, 3 249 569 und 3 345 430 beschrieben, wobei entweder geringe Mengen wasserlöslicher nichtionischer Polymerer, z.B. Polyethylenoxid dem Latex bei der Koagulation zugesetzt werden oder mit hochkonzentrierten Lösungen des Koagulationsmittel unter Ausbildung einer pastenförmigen Koagulatmasse gearbeitet wird.

Außer einem zu hohen Feinanteil wirkt sich auch ein zu hoher Anteil an grobkörnigem Pulver nachteilig aus, z.B. durch die Einschluß von Fällungsmittel, welches nur schwierig ausgewaschen werden kann. Als Möglichkeit zur Reduzierung des Grobkornanteils sei hier das in DAS 1 958 498 beschriebene Aufarbeitungsverfahren unter intensiver Mischung von Polymerdispersion und Fällmittel bei hoher Turbulenz genannt.

Alle diese Verfahren reduzieren nur entweder den Grobanteil oder den Feinanteil und erfordern einen relativ großen technischen Aufwand. Außerdem wird in keinem Falle gleichzeitig das thermooxidative Verhalten des resultierenden Polymerpulvers positiv beeinflußt.

Gegenstand der Erfindung ist ein Verfahren zur Herstellung elastisch-thermoplastischer oder thermoplastischer pulverförmiger Formmassen mit einheitlicher Korngröße und verbesserter Thermostabilität, das dadurch gekennzeichnet ist, daß man die Formmassen in Form ihres Latex mit 0,75 bis 10 Gew.-Teilen (bezogen auf 100 Gew.-Teile Latexfeststoff), bevorzugt mit 1 bis 8 Gew.-Teilen, besonders bevorzugt mit 1,5 bis 5 Gew.-Teilen eines in Emulsionsform vorliegenden schwefelhaltigen, elastischthermoplastischen Pfropfprodukts, dessen auf einen Kautschuk pfropfpolymerisierter Thermoplastanteil eine Vicat A/120-Erweichungstemperatur von 30° bis 95°C, vorzugsweise von 40° bis 75°C besitzt und das einen durch eingebaute, gegebenenfalls substituierte Thioalkylgruppen eingebrachten Schwefelgehalt von 0,5 bis 5,0 Gew.-%, vorzugsweise von 0,8 bis 3,5 Gew.-% hat, vermischt und bei Temperaturen von 75°C bis 120°C, vorzugsweise von 80°C bis 100°C, gegebenenfalls unter Einwirkung von Druck, durch Zusatz eines Koaguliermittels ausfällt und dann aufarbeitet.

Die erfindungsgemäßen Formmassen sind gut rieselfähige Pulver mit einer einheitlichen Korngröße ohne größere — Mengen von Fein — oder Grobanteil; sie haben eine höhere Stabilität bei thermischer Belastung in Gegenwart von Luftsauerstoff.

Als schwefelhaltige elastisch-thermoplastische Pfropfprodukte werden solche mit einer Vicat A/120-Erweichungstemperatur nach DIN 53460 des Thermoplastanteils der auf den Kautschuk polymerisierten Monomeren von 30°C bis 95°C eingesetzt. Bevorzugt sind dabei solche mit einer Vicat A/120-Erweichungstemperatur des Thermoplastanteils von 40°C bis 75°C.

Der Schwefelgehalt der Polymerisate beträgt zwischen 0,5 und 5,0 Gew.-%, vorzugsweise zwischen 0,8 und 3,5 Gew.-%, wobei der Schwefel durch eingebaute, gegebenenfalls substituierte Thiolalkylgruppen eingebracht wird.

Die schwefelhaltigen Pfropfprodukte werden in Latexform durch Emulsionspolymerisation von Vinylmonomeren in Gegenwart eines teilchenförmigen Kautschuks mit einem mittleren Teilchendurchmesser ($d_{50}$) von 0,05 bis 20,0 µm, vorzugsweise 0,1 bis 1,0 µm, und einer Glastemperatur $\leq$ 10°C hergestellt. Beispiele für einsetzbare Kautschuke sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z.B. Hexadien-1,5 oder Norbornadien in kleinen Mengen enthalten). Die mittleren Teilchendurchmesser ($d_{50}$) werden mittels Ultrazentrifuge (vergl. W. Scholtan, H. Lange: Kolloid-Z. und Z. Polymere *250,* S. 782—798 (1972)) bestimmt.

Als Vinylmonomere werden solche eingesetzt, die alleine polymerisiert, thermoplastische Harze ergeben, z.B. Vinylaromaten der Formel I oder Verbindungen der Formel II oder deren Gemische,

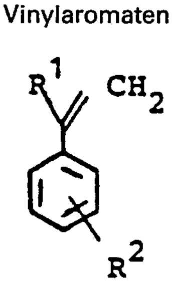

I

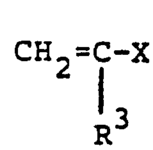

II

wobei $R^1$ Wasserstoff oder Methyl, $R^2$ Wasserstoff oder in ortho-, meta- oder para-Stellung befindliches Halogen oder Alkyl mit 1 bis 3 Kohlenstoffatomen, $R^3$ Wasserstoff oder Methyl und X eine Cyano- (CN)-, Ester- $COOR^4$)- oder Amidgruppierung ($CONR^5R^6$) darstellt, und $R^4$ Wasserstoff oder Alkyl mit 1 bis 4 Kohlenstoffatomen, $R^5$ und $R^6$ Wasserstoff, Phenyl oder Alkyl mit 1 bis 4 Kohlenstoffatomen bedeuten.

Beispiele für Verbindungen der Formel I sind Styrol, α-Methylstyrol, p-Methylstyrol und Vinyltoluol, Beispiele für Verbindungen der Formel II sind Acrylnitril, Methacrylnitril, Methylacrylat und Methylmethacrylat. Weitere geeignete Monomere sind z.B. Vinylacetat oder N-Phenylmaleinimid.

Bevorzugte Monomere sind Mischungen aus Styrol und Acrylnitril sowie aus Styrol, Acrylnitril und Methylmethacrylat.

Diese Monomeren werden auf den Kautschuk in Gegenwart einer oder mehrerer Mercaptogruppenhaltiger Verbindungen pfropfpolymerisiert. Geeignet sind beispielsweise Alkylmercaptane mit 1 bis 18 C-Atomen, Mercaptocarbonsäuren und deren Ester mit $C_1$—$C_6$-Alkoholen, Mercaptoalkohole mit 2 bis 12 C-Atomen sowie Arylalkylmercaptane mit 10 bis 20 C-Atomen.

Die Menge dieser Monomeren wird so gewählt, daß eine Vicat A/120-Erweichungstemperatur im angegebenen Bereich erzielt wird.

Bevorzugte Mercaptane sind tert.-Dodecylmercaptan und n-Dodecylmercaptan bzw. deren Gemische.

Die Pfropfprodukte besitzen einen Kautschukgehalt von 1 bis 80 Gew.-%, insbesondere von 10 bis 60 Gew.-%, die Gelgehalte, gemessen in Aceton bei 25°C, betragen 5 bis 95 Gew.-%, insbesondere 20 bis 80 Gew.-%.

Bevorzugte, unter Mercaptan-Zusatz hergestellte elastich-thermoplastische Pfropfprodukte sind Reaktionsprodukte von

a) 50—80 Gew.-Teilen Styrol und/oder α-Methylstyrol
b) 10—30 Gew.-Teilen Acrylnitril
c) 7,5—25 Gew.-Teilen tert.-Dodecylmercaptan

auf

d) 10—200 Gew.-Teile Polybutadien.

Die Emulsionspolymerisation wird unter Verwendung anionischer Emulgatoren wie. z.B. Natrium-, Kalium- oder Ammoniumsalze langkettiger Fettsäuren mit 10 bis 20 C-Atomen, z.B. Kaliumoleat, Alkylsulfate mit 10 bis 20 C-Atomen, Alkylarylsulfonate mit 10 bis 20 C-Atomen oder Alkali- bzw. Ammoniumsalze der disproportionierten Abietinsäure durchgeführt.

Geeignete radikalbildende Initiatoren sind organische und anorganische Peroxide, anorganische Persulfate wie z.B. Kaliumpersulfat, Azoinitiatoren wie z.B. Azobisisobutyronitril, sowie Redox-Systeme, die aus einem Oxidationsmittel, vorzugsweise einem Peroxid und einem Reduktionsmittel bestehen. Die Polymerisation kann bei Temperaturen von 30°C bis 100°C, vorzugsweise von 50°C bis 80°C durchgeführt werden. Als bevorzugter Initiator wird Kaliumpersulfate eingesetzt.

Den in Form ihrer Latices vorliegenden elastisch-thermoplastischen und thermoplastischen Formmassen wird der Latex der schwefelhaltigen, elastisch-thermoplastischen Pfropfpolymerisats zugesetzt in Mengen entsprechend 0,75 bis 10 Gew.-%, bevorzugt 1 bis 8 Gew.-% und besonders bevorzugt 1,5 bis 5 Gew.-% schewefelhaltiges Pfropfpolymerisat bezogen auf Formmasse (im Latex), bei 10°C bis 80°C, vorzugsweise bei ca. 20°C.

Erfindungsgemäß können alle als wäßrige Emulsion vorliegenden elastisch-thermoplastischen oder thermoplastischen Polymerisate durch Mischen mit den Emulsionen schwefelhaltiger, elastisch-thermoplastischer Pfropfprodukte in pulverförmige Formmassen mit einheitlicher Korngröße und verbesserter thermischer Stabilität in Gegenwart von Luft überführt werden.

Beispiele für geeignete Polymere in Latexform sind Polystyrol, Co- und Terpolymerisate des gegenbenenfalls kern- oder seitenkettensubstituierten Styrols mit anderen harzbildenden Monomeren wie (Meth)Acrylnitril, (Meth)Acrylsäuremethylester, α-Methylstyrol, p-Methylstyrol, Vinyltoluol, sowie anderen kern- oder seitenkettensubstituenten Styrolen, N(Cyclo)-Alkylmaleinimide, N(Alkyl)-Phenylmaleinimiden, z.B. Styrol/Acrylnitril-Copolymerisate, Styrol/Methylmethacrylat-Copolymerisate oder α-Methylstyrol/Acrylnitril-Copolymerisate sowie die durch Polymerisation von harzbildenden ungesättigten Verbindungen in Gegenwart einer kautschukelastischen Komponente, beispielsweise Polybutadien, Polyisopren oder Acrylatkautschuk hergestellten elastisch-thermoplastischen Polymerisate.

Bevorzugt sind Latex-Gemische aus einem Latex eines elastisch-thermoplastischen Polymeren, z.B. dem Pfropfprodukt eines harzbildenden Monomeren, (Styrol, α-Methylstyrol, p-Methylstyrol, (Meth)Acrylnitril, (Meth)Acrylsäuremethylester oder deren Gemische) auf Polybutadien oder Copolymerisate von Butadien mit Acrylnitril und/oder Styrol und einem Latex einem harten und spröden Harzes, beispielsweise einem Styrol- oder α-Methylstyrol- oder p-Methylstyrol-Acrylnitril-Copolymerisat.

Besonders bevorzugt sind Latices von ABS-Polymerisaten der folgenden Zusammensetzung:

(A) 5 bis 100 Gew.-%, vorzugsweise 5 bis 80 Gew.-%, eines Pfropfmischpolymerisats, hergestellt durch Pfropfpolymerisation von

1) 10 bis 95 Gew.-%, vorzugsweise 10 bis 80 Gew.-%, einer Mischung aus
a) 50 bis 90 Gew.-% Styrol, Alkylstyrol, Methylmethacrylat oder Mischungen daraus,
b) 50 bis 10 Gew.-% Acrylnitril, Alkylacrylnitril, Alkylmethacrylat oder Mischungen daraus auf
2) 90 bis 5 Gew.-%, vorzugsweise 90 bis 20 Gew.-%, eines Polymerisats eines konjugierten Diolefins mit einem Anteil von mindestens 80 Gew.-% einpolymerisiertem konjugiertem Diolefin und

B) 95 bis 0 Gew.-%, vorzugsweise 95 bis 20 Gew.-%, eines thermoplastischen Mischpolymerisats aus

a) 50 bis 95 Gew.-% Styrol, Alkylstyrol, Methylmethacrylat oder Mischungen daraus,

b) 50 bis 5 Gew.-% Acrylnitril, Alkylacrylnitril, Alkylmethacrylat oder Mischungen daraus,

wobei die Summe der harzbildenden Monomeren a) und b) in den Komponenten (A) und (B) zusammen 40 Gew.-% nicht unterschreitet.

Erfindungsgemäße pulverförmige ABS-Formmassen können hergestellt werden:

a) durch Mischen der Emulsionen eines Pfropfpolymerisats A) und eines Copolymerisats B) mit einer Emulsion des schwefelhaltigen, elastisch-thermoplastischen Pfropfprodukts und gemeinsame Fällung und Aufarbeitung.

b) durch Pfropfpolymerisation der gesamten harzbildenden Monomeren auf den Dienkautschuk in Emulsion, Zufügen einer Emulsion des schwefelhaltigen, elastisch-thermoplastischen Pfropfprodukts und gemeinsame Fällung und Aufarbeitung.

Vor der Koagulation können Dispersionen von Antioxidantien zugesetzt werden. Für diese Methode geeignete Emulgatoren — sie müssen eine Koagulation zulassen — sind z.B.: Natrium-, Kalium- oder Ammoniumsalze langekettiger Fettsäuren mit 10 bis 20 C-Atomen, Alkylsulfate mit 10 bis 20 C-Atomen, Alkylarylsulfonate mit 10 bis 20 C-Atomen sowie die Alkali- und Ammoniumsalze der disproportionierten Abietinsäure.

Die Art der Koagulationsmittel richtet sich nach den eingesetzten Emulgatoren. Im sauren wie im alkalischen Bereich emulgierende Mittel (Alkylsulfate, Alkylarylsulfonate sowie Alkylsulfonate) erfordern Elektrolyte, z.B. Calciumchlorid, Magnesiumsulfat oder Aluminiumsulfat in Form ihrer wäßrigen Lösungen als Fällmittel. Bei Emulgatoren, die bei pH-Werten unterhalb 7 keine Emulgierwirkung mehr besitzen, genügen Säuren, z.B. Essigsäure, zur Koagulation.

Wenn als Fällmittel eine wäßrige Lösung benutzt wird, liegt ihre Konzentration bevorzugt zwischen 0,5 und 25% für Elektrolyte und zwischen 0,5 und 90% für Säuren, Kurzkettige Carbonsäuren, z.B. Essigsäure, können auch in reiner Form angewendet werden.

Die Menge an Fällmittel ist bevorzugt 0,01 bis 20% des Festpolymerisats.

Die koagulierten Formmassen können nach bekannten Verfahren, insbesondere durch Filtration oder Abzentrifugieren und anschließendes Trocknen aufgearbeitet werden.

## Beispiele

In den folgenden Beispielen sind Teile immer Gewichtsteile und beziehen sich immer auf Feststoff im Latex oder auf polymerisierbare Bestandteile.

### Beispiel 1

Herstellung eines in Emulsionsform vorliegenden elastisch-thermoplastischen Pfropfprodukts eines Gemisches aus Styrol, Acrylnitril und tert.-Dodecylmercaptan auf Polybutadien:

50 Teile Polybutadien (in Form eines Latex mit einem Feststoffgehalt von 25 Gew.-%) mit einer mittleren Teilchengröße von 0,4 µm werden unter Stickstoff auf 65°C erwärmt, wonach 0,5 Teile Kaliumpersulfat (gelöst in 20 Teilen Wasser) zugegeben werden. Anschließend werden ein Gemisch aus 25,2 Teilen Styrol, 9,8 Teilen Acrylnitril und 15 Teilen tert.-Dodecylmercaptan sowie 2 Teile des Natriumsalzes der disproportionierten Abietinsäure (gelöst in 25 Teilen Wasser) innerhalb 4 Stunden zudosiert, wobei die Pfropfreaktion erfolgt. Nach einer Nachreaktionszeit wird ein Teil des Latex in einer kalten Magnesiumsulfat/Essigsäure-Lösung koaguliert. Das nach Trocknung bei 70°C im Vakuum erhaltene Polymerisat besitzt einen Schwefelgehalt von 2,25%.

Anschließend wird das Polymerisat in einer Soxhlet-Apparatur mit Methylethylketon 24 Stunden lang extrahiert. Die Lösung wird eingeengt, wonach das Lösungsmittel im Vakuum vollständig entfernt wird. Das zurückbleibende Polymerisat besitzt eine Vicat A/120-Erweichungstemperatur von 54°C (gemessen an einem Probekörper mit den Abmessungen 10 mm × 10 mm × 4 mm).

### Beispiel 2

Herstellung eines in Emulsionsform vorliegenden elastisch-thermoplastischen Pfropfprodukts eines Gemisches aus Styrol, Acrylnitril und tert.-Dodecylmercaptan auf Polybutadien:

20 Teile Polybutadien (in Form eines Latex mit einem Feststoffgehalt von 11,5 Gew.-%) mit einer mittleren Teilchengröße von 0,4 µm werden unter Stickstoff auf 65°C erwärmt, wonach 0,5 Teile Kaliumpersulfat (gelöst in 20 Teilen Wasser) zugegeben werden. Anschließend werden ein Gemisch aus 46,8 Teilen Styrol, 18,2 Teilen Acrylnitril und 15 Teilen tert.-Dodecylmercaptan sowie 2 Teile des Natriumsalzes der disproportionierten Abietinsäure (gelöst in 25 Teilen Wasser) innerhalb 4 Stunden zudosiert, wobei die Pfropfreaktion erfolgt. Nach einer Nachreaktionszeit wird ein Teil des Latex in einer kalten Magnesiumsulfat/Essigsäure-Lösung koaguliert. Das nach Trocknung bei 70°C im Vakuum erhaltene Polymerisat besitzt einen Schwefelgehalt von 2,3%.

Anschließend wird das Polymerisat in einer Soxhlet-Apparatur mit Methylethylketon 24 Stunden lang extrahiert. Die Lösung wird eingeengt, wonach das Lösungsmittel im Vakuum vollständig entfernt wird. Das zurückbleibende Polymerisat besitzt eine Vicat A/120-Erweichungstemperatur von 60°C (gemessen an einem Probekörper mit den Abmessungen 10 mm × 10 mm × 4 mm).

Beispiele 3 bis 5

Herstellung elastisch-thermoplastischer pulverförmiger Formmassen.

Jeweils 900 g eines 33%igen Pfropfpolymerisatlatex von 36 Teilen Styrol und 14 Teilen Acrylnitril auf 50 Teile Polybutadien, bei dessen Herstellung 1,5 Teile des Natriumsalzes der disproportionierten Abietinsäure als Emulgator verwendet wurden, werden nach der Zugabe von 1,2 Teilen Antioxidans (bezogen auf 100 Teile Polymerfeststoff) mit den in Tabelle 1 angegebenen Mengen des Latex aus Beispiel 1 bzw. aus Beispiel 2 vermischt, wonach das Latexgemisch in einem Fällkessel mit Propellerrührer zu einer Lösung von 32 g Magnesiumsulfat ($MgSO_4 . 7H_2O$) und 16 g Essigsäure in 1,6 l entsalzem Wasser dosiert wird. Die Mischung wird auf 98 bis 100°C erwärmt, wobei vollständige Koagulation eintritt. Nach Filtration des Fällgemisches wird das Polymerisat bei 70°C im Vakuum getrocknet und der Anteil der Korngrößenfraktionen durch Siebanalyse ermittelt (siehe Tabelle 1). Benutzt wurde eine Prüfsiebmaschine mit Vibrationssieben (Hersteller Haver u. Boecker), die Prüfsiebe werden nach DIN 4188 genormt.

Beispiel 6

Herstellung einer erfindungsgemäßen elastisch-thermoplastischen pulverförmigen Formmasse.

900 g des in den Beispielen 3 bis 5 beschriebenen Pfropfpolymerisatlatex werden ohne vorhergehenden Antioxidans-Zugabe mit 45 g des Latex aus Beispiel 1 vermischt, wonach das Latexgemisch wie unter den Beispielen 3 bis 5 beschrieben koaguliert und in trockenes Polymerpulver überführt wird. Das Pulver mit einer Korngröße von 1 bis 0,1 mm wird durch DSC-Messungen unter Verwendung eines DSC-2-Meßgerätes der Firma Perkin-Elmer auf seine Thermostabilität untersucht:

Isotherme Messung bei 160°C (Spülgas Sauerstoff 3,6 l/h): Induktionszeit bis zur maximalen Oxidationsrate = 35,3 min.

Dynamische Messung (Spülgas Sauerstoff 3,6 l/h, Heizrate 20 K/min): Maximum der exothermen Reaktion bei T = 211°C.

| Beispiel | Eingesetzte Menge Latex aus Beispiel 1 /Gew.-Teile Latexfeststoff (Latex Bsp. 1) pro 100 Gew.-Teile zu koagulierender Latexfeststoff/ | Eingesetzte Menge Latex aus Beispiel 2 /Gew.-Teile Latexfeststoff (Latex Bsp. 2) pro 100 Gew.-Teile zu zu koagulierender Latexfeststoff/ | Korngrößenverteilung | | |
|---|---|---|---|---|---|
| | | | >1 mm | 1 bis 0,1 mm | <0,1 mm |
| 3 (Vergleich) | - | - | 23,50 | 41,08 | 35,42 |
| 4 (erfindungsgemäß) | 7,5 | - | 2,43 | 76,32 | 21,25 |
| 5 ( " ) | - | 5 | 3,71 | 90,05 | 6,24 |

Tabelle 1: Korngrößenverteilung elastisch-thermoplastischer pulverförmiger Formmassen

Beispiel 7

Herstellung einer nichterfindungsgemäßen elastisch-thermoplastischen pulverförmigen Formmasse.

900 g des in den Beispielen 3 bis 5 beschriebenen Pfropfpolymerisatlatex werden ohne vorhergehende Antioxidans-Zugabe und ohne Zusatz des Latex aus Beispiel 1 wie unter den Beispielen 3 bis 5 beschrieben, koaguliert und in trockenes Polymerpulver überführt. Das Pulver mit einer Korngröße von 1 bis 0,1 mm wird durch DSC-Messungen unter Verwendung eines DSC-2-Meßgerätes der Firma Perkin-Elmer auf seine Thermostabilität untersucht:

Isotherme Messung bei 160°C (Spülgas Sauerstoff 3,6 l/h): Induktionszeit bis zur maximalen Oxidationsrate = 2,7 min.

Dynamische Messung (Spülgas Sauerstoff 3,6 l/h, Heizrate 20 K/min): Maximum der exothermen Reaktion bei T = 185°C.

**Patentansprüche**

1. Verfahren zur Herstellung elastisch-thermoplastischer und thermoplastischer pulverförmiger Formmassen, dadurch gekennzeichnet, daß man die Formmassen in Form ihres Latex mit 0,75 bis 10 Gew.-Teilen (bezogen auf 100 Gew.-Teile Latexfeststoff) eines in Emulsionsform vorliegenden schwefelhaltigen, elastisch-thermoplastischen Pfropfprodukts mit einer Vicat A/120-Erweichungstemperatur nach DIN 53460 des Thermoplastanteils der auf den Kautschuk polymerisierten Monomeren von 30°C bis 95°C, einem Kautschukegehalt von 1—80 Gew.-% und einem gelgehalt von 5—95 Gew.-% (gemessen in Aceton bei 25°C) und einem durch eingebaute, gegebenenfalls substituierte Thioalkylgruppen eingebrachten Schwefelgehalt von 0,5 bis 5,0 Gew.-%, vermischt und bei Temperaturen von 75°C bis 120°C, gegebenenfalls unter Einwirkung von Druck, durch Zusatz eines Koaguliermittels ausfällt und dann aufarbeitet.

2. Verfahren nach Anspruch 1, dadurch gekennzeichnet, daß man 1—8 Gew.-Teile des schwefelhaltigen Pfropfpolymerisats mit einem Schwefelgehalt von 0,8 bis 3,5 Gew.-% verwendet.

3. Verfahren nach Anspruch 1, dadurch gekennzeichnet, daß als schwefelhaltiges elastischthermoplastisches Pfropfprodukt ein Reaktionsprodukt von Styrol-, α-Methylstyrol, p-Methylstyrol, Vinyltoluol, (Meth)Acrylnitril, Methyl(meth)acrylat, N-Phenylmaleinimid oder Mischungen daraus und einer Mercaptogruppen-haltigen Verbindung in Gegenwart eines Kautschuks mit einem mittleren Teilchendurchmesser ($d_{50}$) von 0,05—20,0 µm und einer Glastemperatur $\leq$10°C eingesetzt wird.

4. Verfahren nach Anspruch 1, dadurch gekennzeichnet, daß als schwefelhaltiges elastischthermoplastisches Pfropfprodukt ein Reaktionsprodukt von

a) 50—80 Gew.-Teilen Styrol und/oder α-Methylstyrol

b) 10—30 Gew.-Teilen Acrylnitril

c) 7,5—25 Gew.-Teilen tert.-Dodecylmercaptan auf

d) 10—200 Gew.-Teile Polybutadien

eingesetzt wird.

5. Elastisch-thermoplastische oder thermoplastische pulverförmige Formmassen, erhältlich nach dem Verfahren des Anspruchs 1.

**Revendications**

1. Procédé de production de matières à mouler en poudre élastique-thermoplastiques et thermoplastiques, caractérisé en ce qu'on mélange les matières à mouler sous forme de latex avec 0,75 à 10 parties en poids (pour 100 parties en poids de latex sur base solide) d'un produit de greffage élastique-thermoplastique contenant du soufre, se présentant sous forme d'émulsion, avec une température de ramollissement Vicat A/120 selon la norme DIN 53460 de la portion thermoplastique des monomères polymérisés sur le caoutchouc, de 30°C à 95°C, une teneur en caoutchouc de 1 à 80% en poids et une teneur en gel de 5 à 95% en poids (mesurée dans l'acétone à 25°C) et une teneur en soufre introduite par des groupes thioalkyle incorporés, substituées le cas échéant, de 0,5 à 5.0% en poids et on précipite à des températures de 75 à 120°C, le cas échéant sous l'action d'une pression, par addition d'un agent coagulant puis on traite le précipité.

2. Procédé suivant la revendication 1, caractérisé en ce qu'on utilise 1 à 8 parties en poids du polymérisat greffé contenant du soufre, ayant une teneur en soufre de 0,8 à 3,5% en poids.

3. Procédé suivant la revendication 1, caractérisé en ce qu'on utilise comme produit greffé élastique-thermoplastique contenant du soufre, un produit de réaction de styrène, d'α-méthylstyrène, de p-méthylstyrène, de vinyltoluène, de (méth)acrylonitrile, de (méth)acrylate de méthyle, de N-phénylmaléimide ou leurs mélanges et d'un composé contenant des groupes mercapto en présence d'un caoutchouc ayant un diamètre moyen ($d_{50}$) de particules de 0,05 à 20,0 µm et une température de transition vitreuse inférieure ou égale à 10°C.

4. Procédé suivant la revendication 1, caractérisé en ce qu'on utilise comme produit greffé élastique-thermoplastique contenant du soufre un produit de réaction

a) de 50 à 80 parties en poids de styrène et/ou d'α-méthylstyrène

b) de 10 à 30 parties en poids d'acrylonitrile

c) de 7,5 à 25 parties en poids de tertiododécylmercaptan et

d) de 10 à 200 parties en poids de polybutadiène.

5. Matières à mouler en poudre élastique ou thermoplastiques, obtenues par le procédé de la revendication 1.

**Claims**

1. A process for the production of elastic-thermoplastic and thermoplastic powder-form moulding compounds, characterized in that the moulding compounds are mixed in the form of their latices with from 0.75 to 10 parts by weight (based on 100 parts by weight of latex solids) of a sulfur-containing, elastic-thermoplastic graft product present in emulsion form, of which the thermoplastic component of the monomers polymerized onto the rubber has a Vicat A/120-softening temperature according to DIN 53 460 of from 30°C to 95°C, a rubber content of 1 to 80% by weight and a gel content of 5 to 95% by weight (as measured in acetone at 25°C) and in which has a sulfur content introduced by incorporated, optionally substituted thioalkyl groups of from 0.5 to 5.0% by weight and are precipitated by the addition of a coagulant at temperatures of from 75 to 120°C, optionally under pressure, followed by working up.

2. A process as claimed in claim 1, characterized in the 1 to 8 parts by weight of the sulfur containing graft polymer having a sulfur content of 0.8 to 3.5% by weight are used.

3. A process as claimed in claim 1, characterized in that a reaction product of styrene, α-methyl styrene, p-methyl styrene, vinyl toluene, (meth)acrylonitrile, methyl(meth)acrylate, N-phenyl maleic imide or mixtures thereof and a compound containing mercapto groups in the presence of a rubber having an average particle diameter ($d_{50}$) of 0.05 to 20.0 µm and a glass temperature of ≤10°C is used as the sulfur-containing thermoplastic graft product.

4. A process as claimed in claim 1, characterized in that a reaction product of

a) 50 to 80 parts by weight of styrene and/or α-methylstyrene,

b) 10 to 30 parts by weight of acrylonitrile

c) 7.5 to 25 parts by weight of tert.-dodecyl mercaptan

on

d) 10 to 200 parts by weight of polybutadiene is used as the sulfur-containing thermoplastic graft product.

5. Elastic-thermoplastic or thermoplastic powder-form moulding compounds obtainable by the process claimed in claim 1.